(19) Europäisches Patentamt

European Patent Office

Office européen des brevets

(11) Veröffentlichungsnummer : **0 284 106 B1**

## (12) EUROPÄISCHE PATENTSCHRIFT

(45) Veröffentlichungstag der Patentschrift :
**01.02.95 Patentblatt 95/05**

(51) Int. Cl.⁶ : **H04J 3/16**

(21) Anmeldenummer : **88104883.9**

(22) Anmeldetag : **25.03.88**

(54) **Schaltungsanordnung zum Hinzufügen eines Dienstkanals für ein Nachrichtenübertragungssystem.**

(30) Priorität : **26.03.87 US 30754**

(43) Veröffentlichungstag der Anmeldung :
**28.09.88 Patentblatt 88/39**

(45) Bekanntmachung des Hinweises auf die
Patenterteilung :
**01.02.95 Patentblatt 95/05**

(84) Benannte Vertragsstaaten :
**AT BE CH DE ES FR GB GR IT LI NL SE**

(56) Entgegenhaltungen :
**US-A- 3 886 317
IEEE COMMUNICATIONS MAGAZINE. vol. 24,
no. 8, August 1986, New York, US Seiten17 -
25; B. Fleury: "Asynchronous High Speed Digital Multiplexing"**

(56) Entgegenhaltungen :
**Conference Record, IEEE International Conference on Communications, 22-25 Juni 1986,
vol.1 Seiten 371- 375, Toronto CN A.M. Ali:
"Multiplexing and Line Coding Schemes for
Broadband ISDN"
ELEKTRONIK. vol. 31, no. 22, November 1982,
MUNCHEN DE Seiten 89 - 94; P.Marten:
"Optische Sender mit Halbleiterlasern für
hohe Bitraten"
DATA COMMUNICATIONS. vol. 15, no. 7, Juli
1986, NEW YORK US Seiten 141 - 143;E.H. Lee:
"A BOC explains where the bits went"
BELL LABORATORIES RECORD. vol. 53, no. 2,
Februar 1985, MURRAY HILL, NEW JER Seiten
136 - 142; E.T. Mackey et al: "Mixing Data and
Voice on the T1 Line"**

(73) Patentinhaber : **SIEMENS
AKTIENGESELLSCHAFT
Wittelsbacherplatz 2
D-80333 München (DE)**

(72) Erfinder : **Virdee, Harbhajan, Singh
116 West Kristal Way
Phoenix Arizona 85027 (US)**
Erfinder : **Rezaie, Hamid, R.
4549 West Kristal Way
Glendale Arizona 85308 (US)**

EP 0 284 106 B1

EP 0 284 106 B1

**Beschreibung**

Die Erfindung bezieht sich auf eine wie im Oberbegriff des Patentanspruchs 1 angegebene Schaltungsanordnung für ein Nachrichtenübertragungssystem zum Hinzufügen eines Dienstkanals.

Eine derartige Schaltungsanordnung ist bereits aus der Druckschrift IEEE Communications Magazine, vol.24, no.8, August 1986, New York, US, Seiten 17-25; B. Fleury: "Asynchronous High Speed Digital Multiplexing" bekannt. Die bekannte Schaltungsanordnung gestattet es, insbesondere zum Zwecke einer Übertragung von Signalen mit Hilfe von Übertragungseinrichtungen der LWL-Übertragungstechnik, eine Mehrzahl von Digitalsignal-Kanälen zu kombinieren. Die in Frage kommenden Digitalsignale gehören dabei einem bestimmten Hierarchiesystem an.

Verschiedene Hierarchiesysteme sind in der Zeitschrift "telcom report", 2 (1979) Beiheft Digital-Übertragungstechnik, Seiten 16 - 20, insbesondere Tabelle 1 dargestellt. Multiplexer und Demultiplexer sind in derselben Druckschrift auf den Seiten 59 - 64 beschrieben. Die nordamerikanischen Normen für Digitalsignal-Multiplexer, die DS1-, DS1C- und DS2-Signal in DS3-Signale umsetzen, sind in der Bell-Druckschrift "Digital Multiplexers Requirements and Objectivs", Direktor-Exchange Systems Design, AT&T, 1982, dargestellt und besprochen. Die nachfolgende Tabelle zeigt diese Signale mit ihrer Sprachkanalzahl und ihrer Übertragungs-Bitrate.

| Leistung | Kanalzahl | Bitrate | | |
|----------|-----------|---------|------|--------|
| DSO | 1 | | 64 | kbit/s |
| DS1 | 24 | ca. | 1,5 | Mbit/s |
| DS1C | 48 | ca. | 3 | Mbit/s |
| DS2 | 96 | ca. | 6 | Mbit/s |
| DS3 | 672 | ca. | 45 | Mbit/s |

Ein DSO-Kanal kann in jeder Übertragungsrichtung achtausend 8-bit-Gruppen von Sprache oder Daten pro Sekunde senden und empfangen. Vierundzwanzig DSO-Kanäle können wiederum zu einem DS1-Kanal zusammengefaßt werden. Dabei werden je eine 8-bit-Grupe der vierundzwanzig DSO-Kanäle und ein einzelnes Rahmenkennungsbit in einen 193-bit-Rahmen eingefügt.

Auf diese Weise kann z. B. 672 Sprach-(DSO-)Telefonkanäle, die 28 DS1-, 14 DS1C- oder 7 DS2-Kanälen entsprechen, zusammen in einem digitalen Multiplexer multiplexen, der die verschiedenen Kombinationen von DS1-, DS1C- und DS2-Signalen in und von einem einzelnen DS3-Signal für eine LWL-Übertragung mit einer DS3-Rate von 44,736 Mbit/s multiplext und demultiplext. Für LWL-Übertragungsstrecken können auch sogar höhere Übertragungsraten, wie z. B. 143,36 Mbit/s verwendet werden, um bis zu 2016 digitalisierte Sprachkanäle oder äquivalente DSO-Signale in einen oder von einem 143,36 Mbit/s Datenstrom zu multiplexen und demultiplexen. Zwischen den Nachrichtenendstellen an jedem Ende des LWL-Übertragungsabschnittes kann ein Abzweig- und Einfügungsrepeater für die Vergrößerung des LWL-Übertragungsabschnittes und für einen Zugang zu anderen DS1- oder äquivalenten DS1C- oder DS2-Signalen sorgen.

Aufgabe der Erfindung ist es, bei einer Schaltungsanordnung der eingangs genannten Art, insbesondere in einer Einspeise- und Abzweig-Anordnung, in die bereits gemultiplexten und über die Übertragungsstrecke übertragenen Übertragungskanäle zusätzliche Meldungen einzufügen.

Gemäß der Erfindung wird die Schaltungsanordnung zur Lösung dieser Aufgabe in der im kennzeichnenden Teil des Patentanspruchs 1 angegebenen Weise ausgebildet.

Durch diese Maßnahmen wird in vorteilhafter Weise zugleich sichergestellt, daß die Synchronisation zwischen den hinzuzufügenden Meldungen und der Wiedergewinnung der eingespeisten Meldungen beim Verstärker am entfernten Ende erhalten bleibt. Die Synchronisation zwischen dem hinzugefügten Meldewort und den übertragenen kanalisierten Daten bleibt daher unabhängig davon immer aufrechterhalten, ob sich die zugefügten Kontrollbits des hinzugefügten Meldewortes mit der Zeit, insbesondere in einem sehr kurzen Zeitintervall, ändern. Die hinzugefügten Meldungen können insbesondere Steuerinformationen sein.

Zweckmäßigerweise werden eine Mehrzahl von Eingangsmeldedatenbits zu einer Mehrzahl von Eingangsnachrichtenübertragungskanälen in Form eines Eingangsmeldewortes hinzugefügt, wobei jedes der einzelnen Datenbits geändert werden kann, ohne in nachteiliger Weise die Fähigkeit des Systems zu beeinflussen, am empfangenden Ende zu synchronisieren und das hinzugefügte Steuerwort aus dem gemultiplexten Datenstrom wiederzugewinnen. Auf diese Weise wird somit ein Dienstkanal gebildet. Die Synchronisationsschaltung gemäß der vorliegenden Erfindung ist besonders nützlich bei der Nachrichtenübertragung von einer großen Zahl von Übertragungskanälen, wie es bei der LWL-Übertragung der Fall ist. Dabei kann ein einzelnes Meldewort zweckmäßig sein, z. B. als ein Alarm mit Bezug auf einen oder mehrere der Multiplex-Nachrichtenübertragungskanäle.

Vorteilhafte Ausgestaltungen der Erfindung ergeben sich aus den abhängigen Patentansprüchen.

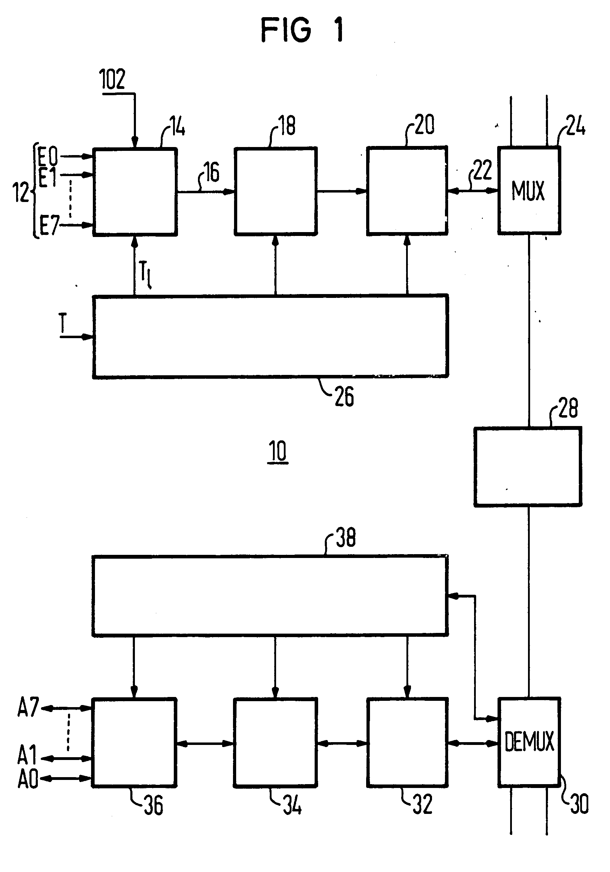

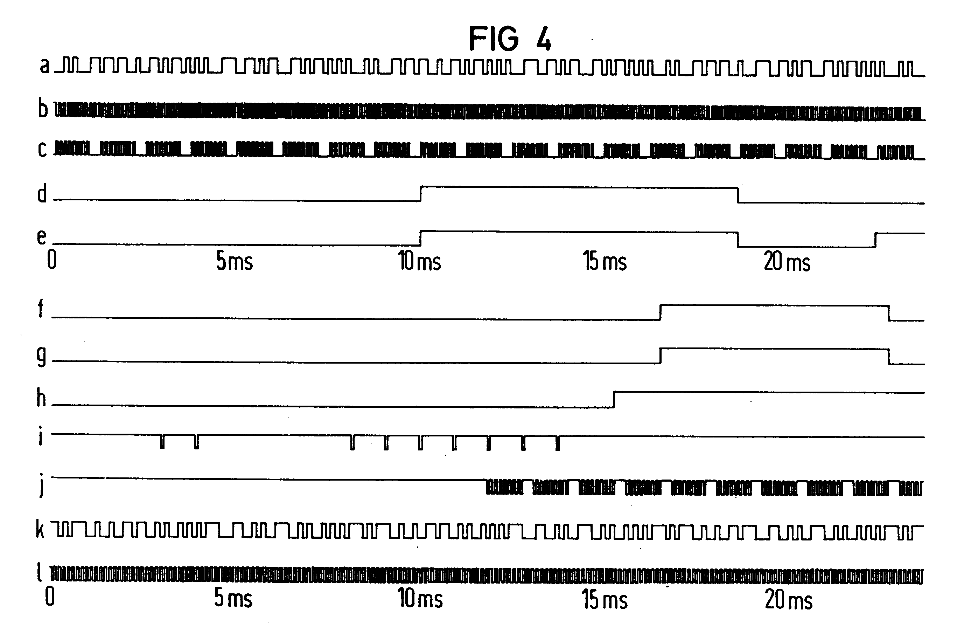

Die Erfindung wird anhand der in den Figuren 1 - 3 gezeigten Ausführungsbeispiele und anhand der in Fig. 4 dargestellten Impulsdiagramme näher erläutert.

Es zeigen

| | |
|---|---|
| Fig. 1 | ein Blockschaltbild einer Schaltung zum Multiplexen eines Dienstkanals in eine Mehrzahl von Datenkanälen gemäß der vorliegenden Erfindung, mit einer Vorrichtung, die mit Hilfe von Eingangssteuersignalen eine Synchronisation und eine synchrone Wiedergewinnung ermöglicht, |
| Fig. 2 | einen Stromlauf des Sendeteils der anhand von Fig. 1 beschriebenen Schaltungsanordnung, |
| Fig. 3 | einen Stromlauf des Empfangsteils der anhand von Fig. 1 beschriebenen Schaltungsanordnung und |
| Fig. 4 (a) bis Fig. 4(l) | Impulsdiagramme, die für eine Erläuterung der Funktion der Sende- und Empfangsschaltungen der anhand von Fig. 2 und Fig. 3 beschriebenen Erfindung nützlich sind, |
| Fig. 4 (a) | Datenimpulse, |
| Fig. 4 (b) | ein 8 kBit-Takt, |
| Fig. 4 (c) | einen lückenden Takt |
| Fig. 4 (d) | einen Signalverlauf am Eingang E5 nach Fig. 1 |
| Fig. 4 (e) | einen Signalverlauf am Eingang E7 nach Fig. 1 |
| Fig. 4 (f) | und für den Empfangsteil einen Signalverlauf am Ausgang A5 nach Fig. 1 |
| Fig. 4 (g) | einen Signalverlauf am Ausgang A7 nach Fig. 1 |
| Fig. 4 (i) | Synchronisationsimpulse |
| Fig. 4 (j) | Taktimpulse |
| Fig. 4 (k) | Eingangs-Seriendaten und |
| Fig. 4 (l) | einen Eingangstakt. |

Das in Fig. 1 gezeigte Blockschaltbild bezieht sich allgemein auf ein Übertragungssystem zwischen einer zentralen Endstelle und einer oder mehreren daran angeschlossenen Endstellen über eine Nachrichtenübertragungsstrecke zur Übertragung einer Mehrzahl von Kanälen mit Nachrichteninformationen, die auch eine optische LWL-Übertragungsstrecke umfassen kann. Mehrere Melde- oder Steuersignale oder von Fühlern stammende Daten werden unter Verwendung eines seriellen Kanals auf der Übertragungsstrecke hinzugefügt und in einer und/oder in beiden Richtungen übertragen. Die vorliegende Erfindung sieht auch ein optisches Abzweigen im Falle eines LWL-Übertragungskanales vorgesehen, in dem ein Meldewort hinzugefügt und zusammen mit anderen Kanälen als Multiplexsignal über eine LWL-Übertragungsstrecke übertragen werden kann.

In Fig. 1 ist ein Blockschaltbild einer Schaltungsanordnung zum Hinzufügen eines Dienstkanals zu einer Mehrzahl von gemultiplexten Nachrichten- und/oder Datenkanälen für eine Übertragung in einem LWL-Übertragungssystem allgemein dargestellt und mit 10 bezeichnet. Für das nachfolgend beschriebene Ausführungsbeispiel ist ein 8-kbit/s-Dienstkanal beschrieben, der mit anderen Datenkanälen gemultiplext ist, die auch Daten der Hierarchiestufen DS1, DS1C und DS2 umfassen. Ein typischer DS1-Datenkanal kann vierundzwanzig 64-kbit/s-PCM-Sprachkanäle umfassen. Einer dieser 64-kbit/s-Kanäle kann in acht 8-kbit/s-Kanäle unterteilt werden. Einer dieser 8-kbit/s-Kanäle wird von der vorliegenden Erfindung benutzt. Der Dienstkanal ist als zehn Einzelbitströme von je 0,8 kbit/s, nämlich acht Melde-und zwei Synchronisations-Bit zu diesem 8-kbit/s-Kanal hinzugefügt. Es ist jedoch darauf hinzuweisen, daß die anderen sieben 8-kbit/s-Kanäle auch von sieben zusätzlichen Dienstkanal-Hinzufügungsschaltungen der vorliegenden Erfindung benutzt werden können oder daß andere Kanäle mit höherer oder niedrigerer Bitrate benutzt werden können.

Der einzelne hier als ein Beispiel beschriebene, eingefügte 8-kbit-Kanal ist als ein Beispiel für einen der vielen möglichen einzelnen oder mehrfachen Dienstkanäle beschrieben, die in den Übertragungsdatenstrom gemultiplext werden und gemäß der vorliegenden Erfindung genau synchronisiert werden können. Ein Meldekanal 12 umfaßt acht Eingänge E0 bis E7. Diese acht Eingänge E0 bis E 7 sind einander parallel geschaltet und einem Parallel-Serien-Umsetzer 14 zugeführt. Die Meldesignale des Meldekanals 12 stammen insbesondere von acht verschiedenen Fühlpunkten in einem Nachrichtenübertragungssystem und können z. B. Einzelbitalarme wie "belegt", "nicht belegt", "gefühlte Temparatur" usw. sein. Jeder Ein-Bit-Meldeeingang kann eine Bitrate von 0,8 kbit/s haben, die nach Parallel-Serien-Um-setzung durch den Parallel-Serien-Umsetzer 14 in einen einzelnen 8-kbit/s-Datenstrom mit Rahmenstruktur auf der Leitung 16 umgesetzt wird. Die 8-kbit/s-Meldewörter auf Leitung 16 werden im Verwürfler 18 verwürfelt, um für das Bitmuster der in serielle Form umgesetzten Melde- bzw. Meßpunktdaten eine Zufallsverteilung zu erhalten. Diese Verwürfelung verhindert, daß ein Muster, auf das synchronisiert wird, aufgrund irgend einer Kombination von Eingangspunkten ebenfalls auftritt.

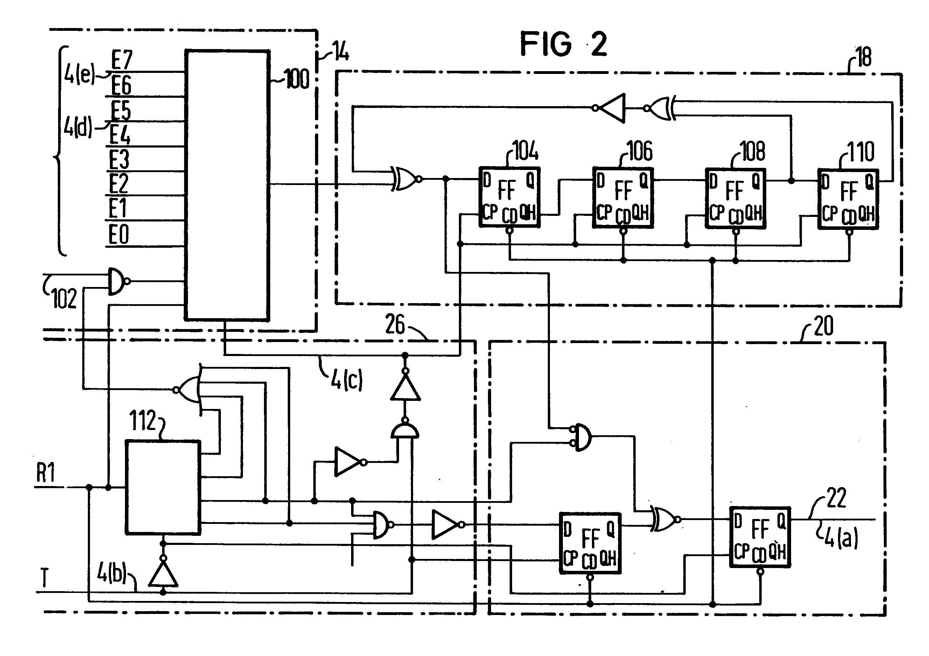

Der Verwürfler 18 kann ein vierstufiger Verwürfler sein, der von der dritten und vierten Stufe zurückgekoppelt ist. Andere bekannte Verwürfler können ebenfalls Verwendung finden. Die Synchronisationsinformation in Form von Start- und Stopbits nach jedem 8-Bit-Steuerwort ist mit Hilfe der Synchronisations-Hinzufügungsschaltung 20 in Lücken im Takt eingefügt, wie es im folgenden anhand von Figur 2 erläutert wird. Diese Synchronisationsbits werden nach dem Verwürflungsvorgang eingefügt, so daß die Ausgangsdaten auf Leitung 22, die mit Hilfe des Multiplexers 24 mit anderen mit Rahmen versehenen Nachrichtendaten gemultiplext sind, die Synchronisationsbits in einer periodischen Folge enthalten.

Die durch den 8-kbit-Takt T getaktete Steuerschaltung 26 liefert ein lückendes Taktsignal an das Schieberegister 14, an den Verwürfler 18 und an die Synchronisations-Hinzufügungsschaltung 20 zu Hinzufügung eines Synchronisationsbits. Die Steuerschaltung 26 kann z. B. einen Modulo-10-Zähler enthalten, der zurückgesetzt wird, um das nächste Bit zu synchronisieren, und dies um sicherzustellen, daß die Daten jeweils richtig ihren Taktimpulsen zugeordnet werden. Die vom Multiplexer 24 gemultiplexten Daten werden bis zu einer geeigneten LWL-Übertragungsrate gemultiplext und über ein LWL-Übertragungsmedium 28, zu einem Demultiplexer 30 beim Empfänger übertragen.

Die 8-kbit-Meldewörter werden beim Demultiplexer 30 wiedergewonnen. Nach Synchronisation durch die Synchronisationschaltung 32 werden die Daten im Entwürfler 34 entwürfelt und in eine parallele Form umgesetzt, um die entsprechenden Steuer-Eingängen und/oder Meßpunkte mit den Meldesignalen 12 an den Eingängen Nr. 0 bis 7 zur Verfügung zu stellen.

Die vereinfachte Fig. 1 beschreibt nur eine Übertragungsrichtung und zwar von der zentralen Endstelle zu einer entfernten Empfangsendstelle. Die Übertragung in der anderen Richtung, d.h. von der entfernten Endstelle zur zentralen Endstelle kann in genau derselben Weise vorgenommen werden. Außerdem ist in der Beschreibung von Fig. 1 das Übertragungsmedium als ein Lichtwellenleiter mit einer optischen Faser dargestellt, wobei die Daten- und Steuerwörter auf geeignete LWL-Übertragungsraten gemultiplext sind. Es kann jedoch jedes Übertragungsmedium, das die Kapazität zur Übertragung von seriellen Daten mit wenigstens 8 kbit/s hat, verwendet werden.

Der Empfänger hat die Eigenschaft, sich für den Fall, daß die Synchronisation aufgrund einer Fehlfunktion des Systems oder aufgrund von Fehlern verloren gegangen sein sollte, in einer angemessenen Zeit neu zu synchronisieren. Bei der Synchronisationsschaltung 32 besteht der Synchronisationsvorgang darin, die Synchronisationsbits in dem empfangenen 8-kbit/s-Datenstrom zu lokalisieren und einen Bezugspunkt für die Zuordnung der Datenbits zu den richtigen Meldeausgängen festzusetzen. Ankommende Daten werden in das Schieberegister getaktet, um eine Seriell-Parallel-Umsetzung in Serien-Parallel-Umsetzer 36 zu erzielen. Die Ausgänge des Serien-Parallel-Umsetzers 36 sind mit AO ... A7 bezeichnet. Dies alles wird durch die Steuerschaltung 38 gesteuert, die einen zwölfstufigen Zähler enthält, der bis zwölf zählt und das Zählergebnis bis zur Ermittlung eines Synchronisationsbits beibehält und dann zurückgesetzt wird. Der Zähler der Steuerschaltung 38 wirkt nach seiner Rücksetzung zur Aufrechterhaltung der Synchronisation jedoch wie ein Modulo-10-Zähler.

Die spezifischen Einzelheiten der Schaltung, die in dem vereinfachten Blockschaltbild von Fig. 1 enthalten sind, werden anhand der Fig. 2, 3 und 4 beschrieben. Im folgenden werden anhand dieser Figuren der Sendeteil, der Empfangsteil und verschiedene zum Beschreiben der Funktion zweckmäßige Impulsfolgen der der Meldewort-Einfügung und der Synchronisationstechnik der Erfindung erläutert.

Der Meldewortsendeteil der Schaltungsanordnung nach Fig. 1, wie er im einzelnen in Fig. 2 gezeigt ist, und de einen Rücksetzeingang R1 hat, setzt die parallelen 8 Bits der Eingangsmeldungen in das Meldewort im 8-kbit/s-Kanal um. Diese Eingänge sind mit einem 8-Bit-Schieberegister 100 verbunden, dem auch ein Eingangsänderungsbit auf Leitung 102 zugeführt wird. Das Schieberegister 100 bewirkt die Parallel-Serienumsetzung und einen lückenden Takt $T_L$, wie er durch die Impulsfolge 4 (c) dargestellt ist. Mit Hilfe des lückenden Taktes wird das Schieberegister getaktet, das mit den Melde-Meßpunktdaten Eingänge 0 bis 7 parallel geladen werden kann. Die Impulsfolgen der Eingänge E5 und E7 sind als Beispiel zur Verdeutlichung jeweils als Impulsdiagramm 4(d) und 4(e) gezeigt.

Der lückende Takt 4(c) hat z. B. eine Frequenz von 8 kHz, wobei nach jeweils acht Taktimpulsen zwei Impulse fehlen. Dies ergibt die Lücken, wie sie aus dem Impulsdiagramm nach Fig. 4(c) hervorgehen. Einer der fehlenden Taktimpulse wird dazu verwendet, die neuen Daten einzulesen, die z. B. die Eingangsänderungsimpulse sein können. Für den Fall, daß irgendein Steuer- bzw. Meßfühlereingang E0 bis E7 während des Ladevorgangs des Schieberegisters seinen Zustand ändert, werden die Daten nicht geladen, da ein solches Laden dazu führen würde, daß falsche Daten in das Schieberegister 100 geladen wurden. Die geänderten Daten werden dann während des nächsten Ladezyklus geladen. Daher gibt es für die Rate, mit der die Melde-/Meßsignale sich ändern können, eine Grenze.

Als Beispiel und in Übereinstimmung mit üblichen Schaltungsparametern wird von den Eingängen E0 bis E7 verlangt, daß sie für ein ungefähres Minimum von 2 ms stabil sind, damit sie über die Schaltung übertragen werden können. Dies ist für typische Alarme wie "belegt" und "nicht belegt" sowie für Temparaturanzeigen mehr als ausreichend.

Der Verwürfler 18, der den in serielle Form umgesetzten Eingängen E0 bis E7 eine Zufallsverteilung gibt, ist mit 18 bezeichnet und im Beispiel als ein einfacher vierstufiger Verwürfler mit Rückkopplung bei der dritten und vierten Stufe dargestellt. Die Flip-Flops, die den Verwürfler 18 bilden, sind mit 104, 106, 108 und 110 bezeichnet.

Die Hinzufügung der Synchronisationsinformation bei der dafür vorgesehenen Synchronsiations-Hinzufügungschaltung 20 wird dadurch erreicht, daß die beiden Lücken, die für je 8 Datenbits erzeugt werden, für ein Stop- und ein Startsynchronisationsbit benutzt werden, das so eingetaktet wird, daß die Synchronisationsbits eingefügt werden, nachdem der Verwürfler die Verwürflung der Eingangssteuerbits abschließt und derart, daß die seriellen Ausgangsdaten diese Bits immer mit einer periodischen Rate enthalten, so daß sie als Synchronisationsbit dienen können.

Die seriellen Daten auf Leitung 22 sind als Impulsdiagramm 4(a) dargestellt. Der 8-kHz-Takt, mit dem die Steuerschaltung 26 beaufschlagt wird, ist im Impulsdiagramm 4(b) dargestellt. Die Steuerschaltung 26 enthält einen Modulo-10-Zähler 112, der die Eingangsdaten der Eingänge E0 bis E7 durch das Schieberegister 100 taktet und dazu verwendet wird, den lückenden Takt, wie er im Impulsdiagramm nach Fig. 4(c) gezeigt ist, zu erzeugen. Die Lücken im lückenden Takt werden durch die Start und Stopsynchronisationsbits gefüllt, die mit Hilfe der Synchronisations-Hinzufügungsschaltung erzeugt und dazu verwendet werden, neue Daten einzulesen, es sei denn, die Steuerdaten an irgend einem der Eingänge E0 bis E7 ändern sich während des Ladevorganges. An den Stellen der Taktlücken werden somit in das zu übertragende Signal die Synchronisationsbits eingefügt. In diesem Fall werden die Daten während des nächsten Ladezyklus geladen. Auf diese Weise wird die Synchronisation ungeachtet der Tatsache genau hinzugefügt, daß sich die Eingangssteuerdaten ändern können.

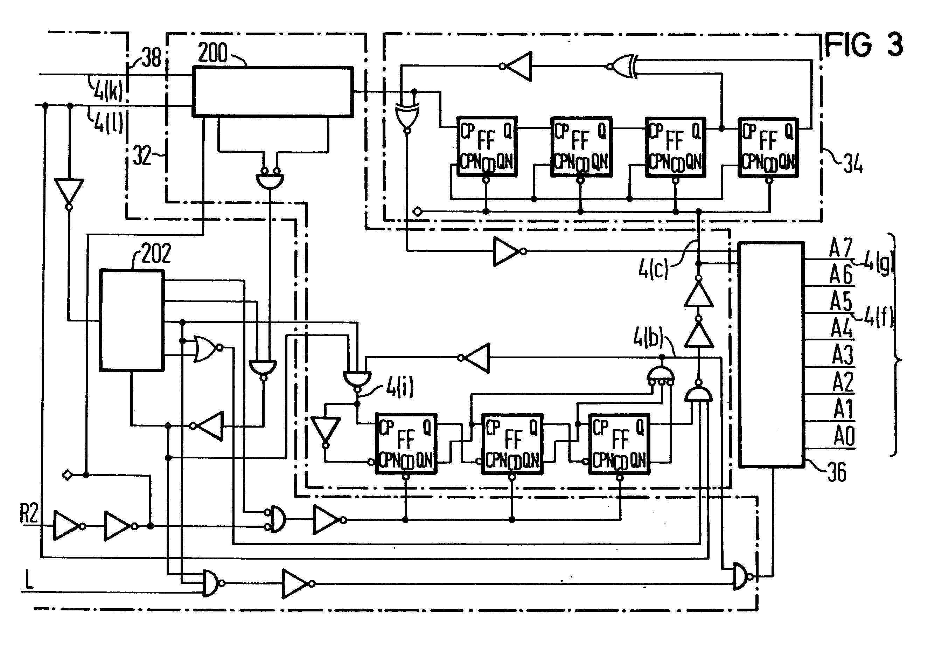

Wie aus Fig. 3 ersichtlich, kann die Synchronisation auch genau wiedergewonnen werden, wenn sich Eingangsmeldedaten ändern. Beim Empfänger nach Fig. 3 ist jedes Bit der seriellen 8-kbit-Daten einem entsprechenden Eingang für Melde-Meßpunktdaten zugeordnet.

Der Empfänger, der zum Rücksetzeingang R2 und einem Leseeingang L hat, synchronisiert, ausgehend von einem Zustand, in dem die Synchronisation verloren gegangen war, mit einem Synchronisationsvorgang, der durch das Takten der ankommenden Daten vom Demulitplexer 30 bewirkt wird, wo Daten mit LWL-Übertragungsraten herunter zu konventionellen DSO-, DS1- usw. Datenraten demultiplext und als serielle Eingangsdaten eines 12-Bit-Schieberegisters 200 empfangen werden.

Die seriellen Eingangsdaten werden durch das Impulsdiagramm 4(k) und der Eingangstakt durch das Impulsdiagramm 4(l) dargestellt. Diese beiden sind als die Daten und Takteingänge des Schieberegisters 200 dargestellt. Wenn Synchronisationsbits an den richtigen Stufen des Schieberegisters gefunden werden, beginnt ein Zähler in der Steuerschaltung 38, die als 12-Bit-Zähler 202 dargestellt ist, zu zählen. Der Synchronisationszähler 202 wird zurückgesetzt, wenn die Synchronisationsbits nicht an den richtigen Stellen im Schieberegister gefunden werden. Erreicht der Zähler z. B. 7, so sollten die in den Serien-Parallel-Umsetzer 36 getakteten Daten als gültig angenommen werden.

Es ist jedoch anzumerken, daß die Daten von dem Zeitpunkt an in den Entwürfler 34 getaktet werden, in dem der Synchronisationszähler z. B. 4 liest. Erreicht der Synchronisationszähler so z. B. einen vorbestimmten Zählerstand von beispielsweise 7, so bleibt er bei diesem Wert stehen, es sei denn, das System fällt außer Synchronisation. Hierdurch ergibt sich, daß der Zähler 202 zunächst bis 12 zählt, bei diesem Zählerstand stehen bleibt, bis ein Synchronisationsbit gefunden wird, und sich dann zurücksetzt und daraufhin in derselben Weise funktioniert, wie der Modulo-10-Zähler des Senders.

Der Synchronisationspuls ist in dem Impulsdiagramm 4(i) gezeigt und die Ausgänge, wie sie im Impulsdiagramm 4(f) entsprechend Ausgang A5 und 4(g), entsprechend Ausgang A7 des Serien-Parallelumsetzers 36 gezeigt sind, werden gemäß Impulsdiagramm 4(h), das das Synchronisationssignal zeigt, synchronisiert. Der Entwürfler 34 ist insofern dem Verwürfler 18 nach Fig. 2 ähnlich, als er mit einer Rückkopplung an seiner dritten und vierten Stufe versehen ist.

Der Takt 4(c) ist ein lückender Takt, der dem Entwürfler zugeführt wird und an den passenden Stellen Lücken aufweist, so daß die den Start/Stopsynchronisationsbits im Datenstrom entsprechenden Taktimpulse nicht zum Takten des Entwürflers beitragen. Der Entwürfler 34 wird beim Start des Systems bzw. bei der Initialisierung zurückgesetzt, und die Daten werden solange nicht durchgeschoben, bis vier aufeinanderfolgende Sätze von Synchronisationsbits gefunden wurden. Das 8-Bit-Schieberegister 36, das die Serien-Parallelum-

5

setzung durchführt enthält auch eine 8-Bit-Latch-Funktion, so daß nachdem alle 8-Daten-Bits in das Schieberegister 36 geladen wurden, die Daten in das 8-Bit-Latch geladen werden. In dem Fall, daß der Ladevorgang, mit dem die Daten vom Schieberegister an das Latch übergeben werden sollten, gleichzeitig sein sollte mit dem Vorgang, bei dem aus dem Latch durch eine externe Vorrichtung gelesen werden sollte, so werden die Daten nicht in das Latch geladen. Dies hindert eine externe Vorrichtung daran, unbekannte Zustände zu lesen. Die Daten werden dann während des nächsten Ladezyklus geladen.

**Patentansprüche**

1.  Schaltungsanordnung zum Hinzufügen eines Dienstkanals für ein Nachrichtenübertragungssystem, bei dem ein Nachrichtenübertragungs-Datenstrom über eine Übertragungsstrecke (28) übertragen wird, **gekennzeichnet durch**
    eine Vorrichtung (14) zum Zusammenfügen der Eingangssignale von mehreren parallelen Meldeeingängen (E0...E7) in serielle Meldewörter,
    eine Vorrichtung (18) zum Verwürfeln dieser seriellen Meldewörter,
    eine Vorrichtung (26) zum Erzeugen eines lückenden Taktes ($T_1$) und zum Takten der Meldewörter mit dem lückenden Takt ($T_1$),
    eine Vorrichtung (20) zum Einfügen von Synchronisationsbits mit einer periodischen Rate in die verwürfelten Meldewörter in den Lücken des lückenden Taktes ($T_1$) und
    eine Vorrichtung (24) zum Multiplexen der synchronisierten Meldewörter in einen gewünschten Kanal des bereits gemultiplexten Nachrichtenübertragungs-Datenstromes.

2.  Schaltungsanordnung nach Anspruch 1,
    **dadurch gekennzeichnet,**
    daß die Übertragungsstrecke als Übertragungsmedium (28) einen Lichtwellenleiter enthält.

3.  Schaltungsanordnung nach Anspruch 1,
    **dadurch gekennzeichnet,**
    daß die Melde-Eingangssignale aus 1-bit-Alarmsignalen bestehen.

4.  Schaltungsanordnung nach Anspruch 3
    **dadurch gekennnzeichnet,**
    daß sie zusätzlich eine Vorrichtung zum Ändern eines der parallelen Melde-Eingangssignale enthält.

5.  Schaltungsanordnung nach Anspruch 4,
    **dadurch gekennzeichnet,**
    daß sie zusätzlich eine Vorrichtung zum Empfangen des Nachrichtenübertragungsstromes enthält.

6.  Schaltungsanordnung nach Anspruch 3,
    **dadurch gekennzeichnet,**
    daß die Synchronisationsbits Start- und Stopbits sind.

7.  Schaltungsanordnung nach Anspruch 5,
    **dadurch gekennzeichnet,**
    daß die Empfangsvorrichtung folgendes enthält:
    zur Gewinnung der Meldewörter eine Vorrichtung (30) zum Demultiplexen, eine Synchronisationsschaltung (32) zum Erkennen der Synchronisationsbits und zum taktgerechten Abfragen der Nachrichtenübertragungsdaten, wenn die Synchronisationsbits lokalisiert sind, in Übereinstimmung mit einem gewonnen Zählergebnis und
    eine Vorrichtung zum Rücksetzen des Zählerergebnisses, wenn die Synchronisationsbits fehlerhaft sind.

8.  Schaltungsanordnung nach Anspruch 7,
    **dadurch gekennzeichnet,**
    daß sie zusätzlich einen Entwürfler (34) zum Entwürfeln der Daten enthält.

9.  Schaltungsanordnung nach Anspruch 8,
    **dadurch gekennzeichnet,**
    daß sie zusätzlich einen Serien-Parallelumsetzer (36) zur Abgabe der entwürfelten und synchronisierten Daten an eine Mehrzahl von parallelen Ausgängen (A0...A7) enthält.

10. Nachrichtenübertragungssystem,
**dadurch gekennzeichnet,**
daß es eine Mehrzahl der Dienstkanal-Hinzufügungsschaltungen nach Anspruch 9 für eine Mehrzahl von parallelen Meldeworteinfügungskanälen zur Einfügung in verschiedene Kanäle der gemultiplexten Nachrichtenübertragungsdaten enthält.

## Claims

1. Circuit arrangement for inserting a service channel for an information transmission system, in which an information transmission data stream is transmitted over a transmission link (28), characterized by
a device (14) for combining the input signals of a plurality of parallel signal inputs (E0...E7) into serial service words,
a device (18) for scrambling said serial service words,
a device (26) for generating a gapped clock ($T_1$) and for clocking the service words with the gapped clock ($T_1$),
a device (20) for inserting synchronization bits with a periodic rate into the scrambled service words in the gaps of the gapped clock ($T_1$), and
a device (24) for multiplexing the synchronized service words into a desired channel of the already multiplexed information transmission data stream.

2. Circuit arrangement according to Claim 1, characterized in that the transmission link contains an optical waveguide as the transmission medium (28).

3. Circuit arrangement according to Claim 1, characterized in that the signal input signals comprise 1-bit alarm signals.

4. Circuit arrangement according to Claim 3, characterized in that it additionally contains a device for changing one of the parallel signal input signals.

5. Circuit arrangement according to Claim 4, characterized in that it additionally contains a device for receiving the information transmission stream.

6. Circuit arrangement according to Claim 3, characterized in that the synchronization bits are start and stop bits.

7. Circuit arrangement according to Claim 5, characterized in that the receiving device contains the following:
a device (30) for demultiplexing for obtaining the service words, a synchronization circuit (32) for detecting the synchronization bits and for the correctly clocked interrogation of the information transmission data once the synchronization bits have been located, in accordance with a counting result obtained, and a device for resetting the counting result if the synchronization bits are incorrect.

8. Circuit arrangement according to Claim 7, characterized in that it additionally contains a descrambler (34) for unscrambling the data.

9. Circuit arrangement according to Claim 8, characterized in that it additionally contains a serial-parallel converter (36) for outputting the unscrambled and synchronized data to a plurality of parallel outputs (A0...A7).

10. Information transmission system, characterized in that it contains a plurality of service channel insertion circuits according to Claim 9 for a plurality of parallel service word insertion channels for insertion into various channels of the multiplexed information transmission data.

## Revendications

1. Montage pour intercaler un canal de service pour un système de transmission d'informations dans lequel un flux de données de transmission d'informations est transmis par l'intermédiaire d'une voie de transmission (28),

caractérisé par un dispositif (14) pour réunir les signaux d'entrée de plusieurs entrées de signalisation parallèles (E0 ... E7) en des mots de signalisation série,

par un dispositif (18) pour embrouiller ces mots de signalisation série,

par un dispositif (26) pour générer une cadence à trous $(T_1)$ et pour synchroniser les mots de signalisation avec la cadence à trous $(T_1)$,

par un dispositif (20) pour insérer des bits de synchronisation à un taux périodique dans les mots de signalisation embrouillés dans les trous de la cadence à trous $(T_1)$, et

par un dispositif (24) pour multiplexer les mots de signalisation synchronisés dans un canal souhaité du flux de données de transmission d'informations déjà multiplexé.

2. Montage selon la revendication 1,

caractérisé en ce que la voie de transmission contient une ligne à fibres optiques en tant que voie de transmission (28).

3. Montage selon la revendication 1,

caractérisé en ce que les signaux d'entrée de signalisation consistent en des signaux d'alarme de 1 bit.

4. Montage selon la revendication 3,

caractérisé en ce qu'il contient en plus un dispositif pour modifier l'un des signaux d'entrée de signalisation parallèles.

5. Montage selon la revendication 4,

caractérisé en ce qu'il contient de plus un dispositif pour recevoir le flux de transmission d'informations.

6. Montage selon la revendication 3,

caractérisé en ce que les bits de synchronisation sont des bits de départ (Start) et d'arrêt (Stop).

7. Montage selon la revendication 5,

caractérisé en ce que le dispositif de réception contient ce qui suit:

pour l'obtention des mots de signalisation, un dispositif (30) pour démultiplexer, un circuit de synchronisation (32) pour reconnaître les bits de synchronisation et pour interroger, en respectant la synchronisation, les données de transmission d'informations, lorsque les bits de synchronisation sont localisés, en concordance avec un résultat de comptage obtenu et

un dispositif pour remettre à l'état initial le résultat du compteur lorsque les bits de synchronisation sont erronés.

8. Montage selon la revendication 7,

caractérisé en ce qu'il contient de plus un désembrouilleur (34) pour désembrouiller les données.

9. Montage selon la revendication 8,

caractérisé en ce qu'il contient de plus un convertisseur série/parallèle (36) destiné à fournir les données désembrouillées et synchronisées à un certain nombre de sorties parallèles (A0 ... A7).

10. Système de transmission d'informations,

caractérisé en ce qu'il contient un certain nombre de montages pour intercaler un canal de service selon la revendication 9 pour un certain nombre de canaux parallèles d'insertion de mots de signalisation destinés à insérer dans des canaux différents, les données multiplexées de transmission d'informations.

# FIG 1

# FIG 2

EP 0 284 106 B1

FIG 3

A7
A6
A5
A4
A3
A2
A1
A0

4(g)
4(f)

34
36
38
32
200
202
4(k)
4(l)
4(c)
4(b)
4(i)
R2

CP FF Q
CP ꟼꟼ QN

FIG 4

EP 0 284 106 B1